(19) Europäisches Patentamt
European Patent Office
Office européen des brevets

(11) Veröffentlichungsnummer: **0 302 484**
**A2**

# (12) EUROPÄISCHE PATENTANMELDUNG

(21) Anmeldenummer: **88112670.0**

(22) Anmeldetag: **04.08.88**

(51) Int. Cl.4: **C08L 67/06 , C08F 283/01 , C08L 79/08 , C08G 63/54 , C08G 63/68**

(30) Priorität: **07.08.87 DE 3726286**

(43) Veröffentlichungstag der Anmeldung: **08.02.89 Patentblatt 89/06**

(84) Benannte Vertragsstaaten: **CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Holoch, Jan, Dr.**
**Koenigsberger Strasse 22 a**
**D-6906 Leimen(DE)**
Erfinder: **Eisenbarth, Philipp, Dr.**
**Gutleutstrasse 12**
**D-6702 Bad Duerkheim(DE)**

## (54) Formmassen aus ungesättigten Polyesterharzen.

(57) Die Erfindung betrifft härtbare Formmassen, enthaltend

A. einen ungesättigten Polyester, der Cyclopenten- oder Cyclohexen-Endgruppen aufweist,

B. ein Bismaleinimid,

sowie gegebenenfalls

C. Comonomere und

D. übliche Zusatzstoffe.

Die Formmassen lassen sich zu Formstoffen mit hoher Wärmeformbeständigkeit und guten mechanischen Eigenschaften auch bei Dauertemperaturbelastung aushärten.

EP 0 302 484 A2

## Formmassen aus ungesättigten Polyesterharzen

Die Erfindung betrifft Formmassen aus ungesättigten Polyesterharzen (UP-Harze), die zu Formstoffen mit guter Temperaturbeständigkeit ausgehärtet werden können.

Formstoffe aus ungesättigten Polyestern, die Cyclopenten- oder Cyclohexenendgruppen enthalten, besitzen zwar hohe Glasübergangstemperaturen (250 bis 300 °C), jedoch bewirkt ein längerdauerndes Erwärmen schon bei wesentlich niedrigeren Temperaturen, daß die mechanischen Eigenschaften abfallen. So beträgt z.B. der Schubmodul G' eines Formstoffs bei 180 °C nur noch die Hälfte des Wertes bei Raumtemperatur. Der Einsatz ungesättigter Polyester ist also besonders dann eingeschränkt, wenn die Formteile bei höheren Temperaturen gute mechanische Eigenschaften besitzen sollen.

Bismaleinimidharze (BMI-Harze) zeigen zwar die bei den ungesättigten Polyestern geschilderten Nachteile nicht, sie sind jedoch schwierig herzustellen (Vorreaktion von BMI-Monomeren mit Comonomeren) und zu verarbeiten. Nachteilig ist auch ihr hoher Preis.

Der Erfindung lag nun die Aufgabe zugrunde, UP-Harze bereitzustellen, welche die genannten Nachteile nicht aufweisen.

Überraschend wurde gefunden, daß eine Formmasse aus einem ungesättigten Polyester, der Cyclopenten- oder Cyclohexenendgruppen enthält, schon bei einem relativ geringen Gehalt an Bismaleinimid sich zu Formstoffen härten läßt, die in ihren thermischen Eigenschaften weitgehend Formstoffen aus BMI-Harzen entsprechen.

Gegenstand der Erfindung sind demzufolge härtbare Formmassen, enthaltend

A. einen ungesättigten Polyester, der Cyclopenten- oder Cyclohexen-Endgruppen aufweist,
B. ein Bismaleinimid, sowie gegebenenfalls
C. Comonomere und
D. übliche Zusatzstoffe.

In der DE-B-21 43 051 werden Mischungen bzw. Präpolymere aus Bismaleinimiden, Polyaminen und ungesättigten Polyestern beschrieben. Die dort offenbarten Polyester sind größtenteils zur Herstellung hochwärmeformbeständiger Formstoffe nicht geeignet. Wählt man für den Polyester aus der Vielzahl der aufgeführten Dicarbonsäuren die Endomethylentetrahydrophthalsäure aus und setzt die minimale Menge an Bismaleinimid-Präpolymeren ein, so erhält man zwar einen temperaturbeständigen Formstoff, der aber bei Dauertemperaturbelastung den erfindungsgemäßen Formstoffen unterlegen ist. Der Polyester weist keine Cyclopenten-Endgruppen auf; die Endomethylentetrahydrophthalsäure ist vielmehr in der Polyester-Kette eingebaut.

Zu den Komponenten ist im einzelnen zu sagen:

Als ungesättigte Polyester A eignen sich die üblichen Kondensationsprodukte aus mehrwertigen, insbesondere zweiwertigen Carbonsäuren oder deren veresterbaren Derivaten, insbesondere deren Anhydriden, mit mehrwertigen, insbesondere zweiwertigen Alkoholen, sowie gegebenenfalls zusätzlich einwertigen Carbonsäuren oder einwertigen Alkoholen, wobei zumindest ein Teil der Einsatzstoffe über ethylenisch ungesättigte, copolymerisationsfähige Gruppen verfügen muß, wobei die Endgruppen Cyclopenten- oder Cyclohexen-Gruppen sind.

Als Alkoholkomponente eignen sich z.B. Ethylenglykol, Propylenglykol-1,2, Propandiol-1,3, Butandiol-1,3, Butandiol-1,4, Hexandiol-1,6, Hexantriol-1,2,6, Neopentylglykol, Diethylenglykol, Triethylenglykol, Dipropylenglykol, Cyclohexandiol-1,2, hydriertes Bisphenol A, Cyclohexandimethanol, ethoxyliertes Bisphenol A sowie Bis(hydroxymethyl)tricyclodecan, Trimethylolpropan, Glycerin und Pentaerythrit.

Geeignete Carbonsäuren bzw. deren Derivate sind zweibasische olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können andere modifizierend wirkende zweibasische, ungesättigte und/oder gesättigte sowie aromatische Carbonsäuren eingebaut werden, z.B. Bernsteinsäure, Glutarsäure, Adipinsäure, Sebacinsäure, Phthalsäureanhydrid, o-Phthalsäure, Isophthalsäure, Terephthalsäure und Tetrahydrophthalsäure.

Zum Einbau der Cyclopenten- bzw. Cyclohexenendgruppen eignen sich z.B. Dicyclopentadien bzw. dessen Derivate oder Substitutionsprodukte, 8(9)-Hydroxy-tricyclo[5.2.1.$0^{2,6}$]dec-3-en, N-Hydroxyalkyltetrahydrophthalimid und N-Hydroxyalkylendomethylentetrahydrophthalimid. In einer bevorzugten Ausführungsform wird freie Maleinsäure bei Temperaturen zwischen 120 und 140 °C mit DCPD umgesetzt, wobei man den Maleinsäuredihydrodicyclopentadienylmonoester erhält, der als monofunktionelle Carbonsäure der Polykondensation zugesetzt wird. Dieselbe Verbindung kann auch durch Umsetzung von Maleinsäureanhydrid und 8(9)-Hydroxy-tricyclo-[5.2.1.$0^{2,6}$]dec-3-en erhalten werden.

Bei einer anderen bevorzugten Ausführungsform erfolgt der Endgruppenverschluß mit N-Hydroxyalkyltetrahydrophthalimid bzw. N-Hyxdroxyalkylendomethylentetrahydrophthalimid, wie in der DE-A-3 230 924 beschrieben ist.

Als Komponente B sind Bismaleinimide der allgemeinen Formel

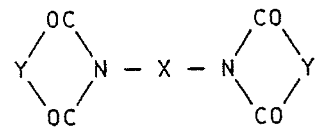

einsetzbar, in der Y eine gegebenenfalls substituierte Vinylengruppe ist und X einen zweiwertigen Rest mit zumindest zwei Kohlenstoffatomen bedeutet. Bismaleinimide sind z.B. aus DE-A-20 40 094, DE-A-27 19 903 und DE-A-3 247 058 bekannt. Neben Bismaleinimiden sind grundsätzlich auch Polymaleinimide sowie Mischungen verschiedener Bismaleinimide geeignet. Bevorzugte Bismaleinimide sind 4,4′-Bismaleinimidodiphenylmethan, 4,4′-Bismaleinimidodiphenylether, 3,3′-Bismaleinimidodiphenylsulfon, 1,3-Bismaleinimidobenzol, 2,4-Bismaleinimidotoluol, 1,6-Bismaleinimidohexan und 2,2,4-Trimethyl-1,6-bismaleinimidohexan. Die Bismaleinimide können auch bis zu 20 % eines Monoimids enthalten. Der Anteil der Komponente B, bezogen auf A, kann 5 bis 150 Gew.% betragen, bevorzugt sind 10 bis 100 Gew.%, insbesondere 20 bis 70 Gew.%.

Geeignete Comonomere C sind Dialkenylverbindungen, aromatische und aliphatische Polyamine, Polyphenole, Aminophenole, Vinyl- und Allylverbindungen. Als Comonomeren geeignete Polyamine sind z.B. aus DE-A 1 770 867 bekannt; bevorzugt sind 4,4′-Diaminodiphenylmethan, 4,4′-Diaminodiphenylsulfon, 4,4′-Diaminodicyclohexylmethan und 3,3′-Diaminodiphenylsulfon. Unter den verwendbaren Polyphenolen sind Bisphenol A, Bisphenol F oder Novolake zu nennen; weitere sind in DE-A 24 59 925 aufgeführt. Geeignete Alkenylphenole oder -phenolether werden in DE-A 26 27 045 beschrieben, bevorzugt ist o,o-Diallylbisphenol A. Ebenfalls geeignet sind oligomere allyl- oder propenylterminierte Arylether (z.B. nach EP-A 230 741) oder allylierte Dicyclopentadien-Polyphenole. Einsetzbare Aminophenole sind z.B. m- oder p-Aminophenol. Unter Vinyl- und Allylverbindungen sind beispielhaft zu nennen: Styrol, Divinylbenzol, Diallylphthalat, Acrylate, Methacrylate, Diallylbenzol, Alkenylphenole, Alkenylphenolether, Triallylisocyanurat, Triallylcyanurat oder Vinylpyrrolidon. Ihr Anteil beträgt 5 bis 150 Gew.%, bezogen auf A. Bevorzugt sind Vinyl- und Allylverbindungen, insbesondere Diallylbisphenol A, in Mengen von 5 bis 50 Gew.%, bezogen auf A.

Als weitere übliche Zusatzstoffe kommen in Frage:

- Füllstoffe, wie Kreide, Kaolin, Quarzmehl, Dolomit, Schwerspat, Metallpulver, Aluminiumoxidhydrat, Zement, Talkum, Kieselgur sowie Pigmente,
- Verstärkungsfasern, wie Glas-, Kohlenstoff-, Asbest- und Cellulosefasern sowie synthetische organische Fasern, z.B. aus Polyethylen, Polycarbonsäureestern, Polycarbonat oder Polyamiden,
- Inhibitoren, wie Hydrochinone, Chinone, Nitrobenzole, N-Nitrosoverbindungen, Salze des zweiwertigen Kupfers und quarternäre Ammoniumsalze,
- Polymerisationsinitiatoren, wie Benzoylperoxid, Methylethylketonperoxid, tert.-Butylperoktoat, tert.-Butylperbenzoat, Cyclohexanonperoxid, Acetylacetonperoxid, Perketale, Percarbonate, Dicumylperoxid, C-C-labile Verbindungen und Azoverbindungen,
- Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin, Imidazole, tertiäre Phosphine, organische Säuren,
- Schrumpfmindernde Polymerisate, wie Polystyrol, Polymethylmethacrylat, Polyvinylacetat, Polyethylen, Polybutadien und Pfropfcopolymere, Copolymere sowie Kondensationspolymere, wie gesättigte Polyester oder Polyesterurethane,
- Elastifizierende Zusätze, z.B. kautschukartige Blockcopolymere und modifiziertes Polytetrahydrofuran,
- Formtrennmittel, flammhemmende Stoffe, Weichmacher.

Zur Herstellung der erfindungsgemäßen Formmassen werden die Ausgangsmaterialien unter Anwendung der üblichen Techniken vermischt und auf Temperaturen zwischen 70 bis 190 °C erhitzt, wobei je nach Reaktionsdauer unter Viskositätsanstieg sich ein Präpolymer bilden kann. Man erhält nach dem Abkühlen eine hochviskose Schmelze oder einen glasartig erstarrten Feststoff, der je nach Verwendungszweck gemahlen oder in einem Lösungsmittel gelöst wird. Die Herstellung der Harze kann auch in einem Lösungsmittel erfolgen.

Zur Herstellung von comonomerhaltigen Formmassen ist es möglich, das Harz direkt durch Zusammengeben bzw. Erhitzen der Komponenten A + B + C herzustellen. In einer anderen Ausführungsform wird zuerst ein Präpolymer aus Komponente A und Bismaleinimid B hergestellt und dann das Comonomer C

zugegeben. Umgekehrt ist es möglich, zuerst das UP-Harz A mit dem Comonomer C umzusetzen und dann das Bismaleinimid B zuzusetzen. Schließlich kann auch ein z.B. kommerziell erhältliches Präpolymer aus Bismaleinimid B + Comonomer C mit der Komponente A vermischt und gegebenenfalls weiter umgesetzt werden.

Die erfindungsgemäßen Formmassen lassen sich z.B. durch Pressen oder Spritzguß einfach verarbeiten.

Sie sind als Imprägnier-, Gieß- und Laminierharze oder als Formmassen (gefüllt oder ungefüllt) einsetzbar. Dienen sie zur Herstellung von Hochleistungsverbundwerkstoffen, so kann die Tränkung von Glas-, Kohlenstoff-oder Aramidfasern unter Bildung von unidirektionalen Prepregs oder Gewebeprepregs entweder aus der Schmelze bei 50 bis 150 °C oder aus Lösung erfolgen. Geeignete Lösungsmittel sind halogenierte Kohlenwasserstoffe, wie z.B. Dichlormethan, Ketone wie z.B. Aceton oder Methylethylketon, ferner Glykolester, Toluol, Dimethylformamid, N-Methylpyrrolidon sowie Gemische aus mehreren Lösungsmitteln.

Die Härtung erfolgt bei Temperaturen von ca. 100 bis 300 °C, gegebenenfalls unter Druck, vorzugsweise zwischen 120 bis 260 °C. Die gewählte Härtungstemperatur hängt entscheidend von der Länge der Härtungszeit ab. Vielfach ist eine stufenweise Härtung vorteilhaft, wobei bei einer niedrigeren Temperatur zunächst unter Formgebung eine Vernetzung der Polymeren herbeigeführt wird. Nach Entformen kann sich dann zur vollständigen Aushärtung eine unter Umständen mehrstündige Nachhärtung oberhalb 200 °C anschließen.

Die ausgehärteten Formstoffe besitzen eine sehr hohe Wärmeformbeständigkeit und sie verlieren ihre guten mechanischen Eigenschaften auch bei Dauertemperaturbelastung nicht. Ihre Wasseraufnahme ist gering.

Es können daraus Isoliermaterialien, Strukturbauteile, Apparategehäuse und elektrische Bauteile hergestellt werden, die hohen Temperaturen ausgesetzt sind.

Die in den folgenden Beispielen genannten Teile und Prozente beziehen sich auf das Gewicht. Die Messungen der Glasübergangstemperatur (Tg) und des Schubmoduls (G') bei verschiedenen Temperaturen erfolgten an 6x1x0,1 cm großen Probekörpern mit Hilfe der Torsions-Schwingungsanalyse nach DIN 53 455. Tg ist ein Maß für die Wärmeformbeständigkeit, G'für die Vernetzungsdichte und die Steifigkeit des Formstoffs.

Beispiel 1 (Vergleich)

490 Teile Maleinsäureanhydrid, 726 Teile Dicyclopentadien und 90 Teile Wasser werden unter Rühren und Darüberleiten von Stickstoff 30 Minuten bei 135 °C und 1 Stunde bei 145 °C gehalten. 171 Teile Ethylenglykol, 2,7 Teile Piperidin und 140 Teile Xylol werden hinzugefügt. 7 Stunden wird bei 180 °C Kondensationswasser entfernt. Das Xylol wird bei 180 °C unter Vakuum abgezogen. Man erhält 1330 Teile eines ungesättigten Polyesters mit Säurezahl 19 und Visk. (100 °C) = 400 mPa•s.

Beispiel 2

100 Teile UP-Harz aus Beispiel 1 und 67 Teile 4,4'-Bismaleinimidodiphenylmethan werden bei 140 °C unter Stickstoff gerührt bis die Schmelzviskosität (100 °C) 980 mPa•s erreicht hat. 3,3 Teile Dicumylperoxid werden hinzugefügt. Das Harz wird im Vakuum entgast, 1 mm dicke Platten werden bei 150 °C gepreßt. Anschließend wird 2 h bei 170 °C, 2 h bei 200 °C und 10 h bei 240 °C nachgehärtet.

Beispiel 3

100 Teile UP-Harz aus Beispiel 1, 19,5 Teile allyliertes Dicyclopentadienpolyphenol als Comonomer (hergestellt durch Umsetzung von Phenol und Dicyclopentadien unter Säurekatalyse, Allylierung der phenolischen Hydroxylgruppen mit Allylchlorid und thermische Umlagerung des Allylphenolethers zum Allylphenol) und 46 Teile 4,4'-Bismaleinimidodiphenylmethan werden bei 135 °C unter Stickstoff gerührt bis die Schmelzviskosität (125 °C) 480 mPa•s erreicht hat. 3 Teile Dicumylperoxid werden hinzugefügt und 1 mm dicke Platten werden bei 150 °C gepreßt. Anschließend wird 1 h bei 150 °C, 1 h bei 180 °C, 1 h bei 210 °C und 10 h bei 240 °C nachgehärtet.

Beispiel 4

294 Teile Maleinsäureanhydrid, 436 Teile Dicyclopentadien und 54 Teile Wasser werden unter Rühren und Darüberleiten von Stickstoff eine Stunde auf 130 °C und 2 Stunden auf 140 °C erhitzt. 294 Teile Maleinsäureanhydrid, 298 Teile Ethylenglykol und 150 Teile Xylol werden hinzugefügt. 6 Stunden wird bei 180 °C Kondensationswasser entfernt. Das Xylol wird bei 180 °C unter Vakuum abgezogen. 830 Teile 4,4′-Bismaleinimidophenylmethan und 1 Teil Methylhydrochinon werden hinzugefügt. 5 Stunden wird bei 180 °C gerührt. Dabei steigt die Viskosität (gemessen bei 150 °C) von 50 mPa•s auf 750 mPa•s. Bei 150 °C werden 415 Teile Diallylphthalat zugesetzt und bei 70 °C 17 Teile Dicumylperoxid. 1 mm dicke Platten werden bei 150 °C gepreßt. Ein Nachhärtungszyklus analog Beispiel 3 schließt sich an.

| | | Beispiel 1 | Beispiel 2 | Beispiel 3 | Beispiel 4 |
|---|---|---|---|---|---|
| Tg dyn | [°C] | 285 | 307 | 320 | > 350 |
| G′ (23 °C) | [N/mm²] | 1400 | 1600 | 1500 | 1800 |
| G′ (100 °C) | [N/mm²] | 1100 | 1450 | 1450 | 1450 |
| G′ (200 °C) | [N/mm²] | 720 | 1300 | 1400 | 1300 |
| G′ (250 °C) | [N/mm²] | 600 | 1200 | 1300 | 1100 |
| G′ (275 °C) | [N/mm²] | 400 | 1050 | 1200 | 970 |
| G′ (300 °C) | [N/mm²] | 45 | 600 | 950 | 700 |

Beispiel 5

600 Teile UP-Harz aus Beispiel 1, 0,2 Teile Methylhydrochinon und 52 Teile 3-Aminophenol wurden unter Stickstoff 1 Stunde bei 145 °C gerührt. Nach Zugabe von 348 Teilen 4,4′-Bismaleinimidodiphenylmethan wurde die Mischung noch weitere 50 Minuten erhitzt. Man fügt anschließend 2 Teile N,N′-Dimethylbenzylamin hinzu und gießt das Harz nach Entlüften zwischen 1 und 4 mm dicke Metallformen. Das erhaltene Polymer besitzt einen E-Modul von 4030 N/mm² (nach DIN 53 457).

**Ansprüche**

1. Härtbare Formmassen, enthaltend
   A. einen ungesättigten Polyester, der Cyclopenten- oder Cyclohexen-Endgruppen aufweist,
   B. ein Bismaleinimid,

sowie gegebenenfalls
   C. Comonomere und
   D. übliche Zusatzstoffe.

2. Härtbare Formmassen nach Anspruch 1, dadurch gekennzeichnet, daß der Polyester A folgende Endgruppen aufweist:

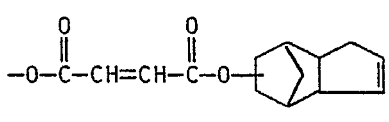

oder

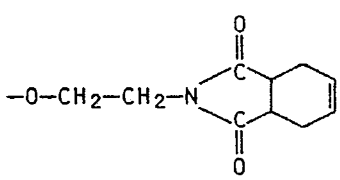

3. Härtbare Formmassen nach Anspruch 1, dadurch gekennzeichnet, daß das Bismaleinimid B die Formel

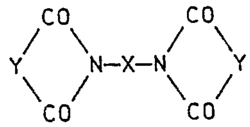

aufweist, wobei Y eine gegebenenfalls substituierte Vinylengruppe ist und X einen zweiwertigen Rest mit mindestens 2 Kohlenstoffatomen bedeutet.

4. Härtbare Formmassen nach Anspruch 1, dadurch gekennzeichnet, daß das Bismaleinimid B in Mengen von 5 bis 150 Gew.%, bezogen auf A, enthalten ist.

5. Härtbare Formmassen nach Anspruch 1, dadurch gekennzeichnet, daß das Comonomer C eine Dialkenylverbindung, ein aromatisches Diamin, ein Polyphenol, ein Aminophenol, eine Allyl- oder eine Vinylverbindung ist.

6. Härtbare Formmassen nach Anspruch 1, dadurch gekennzeichnet, daß sie 5 bis 50 Gew.%, bezogen auf A, einer Vinyl- oder Allylverbindung, vorzugsweise von Diallylphthalat, als Comonomer C enthalten.